(19) **Europäisches Patentamt**

**European Patent Office**

**Office européen des brevets**

(11) **EP 1 031 191 B1**

(12) **EUROPEAN PATENT SPECIFICATION**

(45) Date of publication and mention
of the grant of the patent:
**16.08.2006 Bulletin 2006/33**

(21) Application number: **98950569.8**

(22) Date of filing: **16.10.1998**

(51) Int Cl.:
**H04B 3/20** $^{(2006.01)}$

(86) International application number:
**PCT/SE1998/001858**

(87) International publication number:
**WO 1999/022460 (06.05.1999 Gazette 1999/18)**

(54) **METHOD AND DEVICE AT STEREO ACOUSTIC ECHO CANCELLATION**

VERFAHREN UND GERÄT ZUR STEREO-AKUSTISCHEN ECHOUNTERDRÜCKUNG

PROCEDE ET DISPOSITIF DE COMPENSATION STEREO D'ECHO ACOUSTIQUE

(84) Designated Contracting States:
**CH DE DK ES FI FR GB IT LI NL SE**
Designated Extension States:
**LT LV**

(30) Priority: **29.10.1997 SE 9703972**

(43) Date of publication of application:
**30.08.2000 Bulletin 2000/35**

(73) Proprietor: **Telia AB (publ)**
**123 86 Farsta (SE)**

(72) Inventors:
• **TILL, Ove**
**S-138 37 Älta (SE)**
• **GÄNSLER, Tomas**
**S-226 55 Lund (SE)**

• **ENEROTH, Peter**
**S-222 20 Lund (SE)**

(74) Representative: **Hopfgarten, Nils et al**
**L.A. Groth & Co. KB**
**P.O. Box 6107**
**102 32 Stockholm (SE)**

(56) References cited:
**WO-A1-98/47276          US-A- 5 323 459**
**US-A- 5 513 265          US-A- 5 555 310**
**US-A- 5 661 813**

• **BENESTY J. ET AL: 'A better understanding and an improved solution to the problems of stereophonic acoustic echo cancellation' IEEE INTERNATIONAL CONFERENCE ON ACOUSTIC, SPEECH, AND SIGNAL PROCESSING vol. 1, 1997, pages 303 - 306**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

TECHNICAL FIELD

The present invention relates to echo cancellation in combination with signal coding.

TECHNICAL PROBLEM

Acoustic echo cancellation in stereo channels is a more difficult problem than corresponding mono case. This is due to the fact that each channel carries similar speech signals, which results in problems for the adaptive algorithm that is used. The fields of application for stereo cancellation is/is expected to be/ high-quality video conference systems and the field of tele-games. These fields, however, have different demands on quality, bandwidth etc.

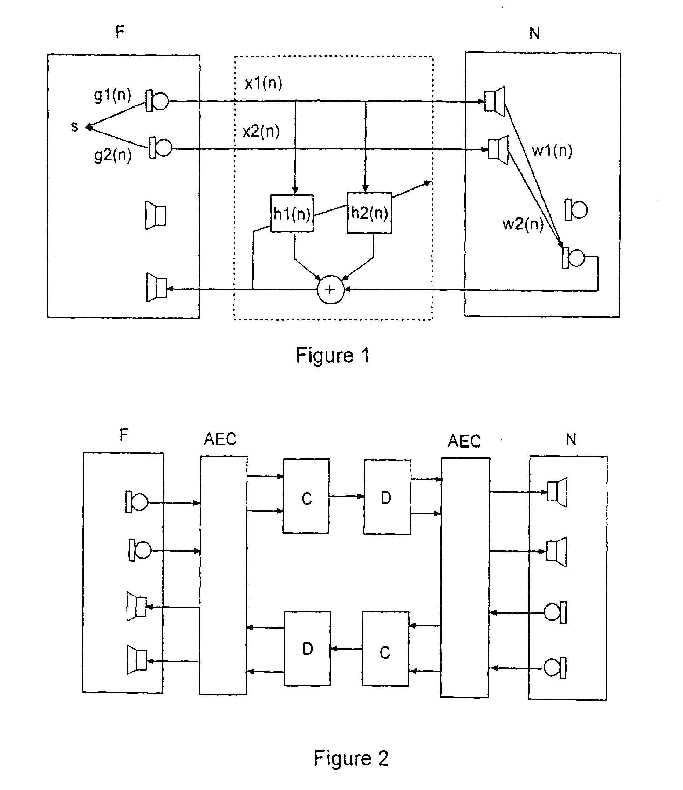

In the mono case, NLMS (Normalized Least Mean Square Algorithm) is used exclusively, due to its robustness against noise and signal variations (none-stationariness). The disadvantage of this algorithm is that it has a convergence which is dependent on the spectral characteristics of incoming signals (far end). A strong (in time) auto correlated signal gives slow convergence and vice versa. In the stereo case, the speech signal is correlated in time, but also between respective channels which slows down the convergence speed for NLMS to such an extent that it will be useless. Echo cancellation then must be performed with some other kind of algorithm than NLMS. Essentially there are two types of algorithms to chose from, sub-band algorithms, or full length RLS (Recursive Least Square). These two of course have different advantages and disadvantages at implementation. The channel correlation also results in that there is no theoretical estimate of echo paths which the echo canceller converges towards, but a lot of solutions which all are dependent on the transmitter room (far end), Figure 1. This results in an unstable echo cancellation, and the echo canceller diverges with irregular intervals. To make the echo canceller converge in a stable way towards the correct echo paths, the stereo signals have to be modifed before they reach the echo canceller as reference signals.

Stereo cancellation includes the following complex of problems:

* The echo paths w1(n), w2(n), Figure 1, in the near end, N, which shall be estimated by AEC is not uniquely indentifiable from measure data.

* The echo cancellation of the canceller is dependent on the variability of the channels, g1(n), g2(n) in the far end, F.

Assume that the signals from the microphone of the far end is given by, Figure 1,

$$x_i(n) = g_i(n) * s(n), \quad i = 1, 2$$

where s(n) is the source signal and $g_i(n)$, i=1,2 is the echo paths of the far end with the length M, "*" describes convolution.

The residual echo/echoes after the echo canceller is

$$e(n) = y(n) - h_{1,L}^T x_{1,L} - h_{2,L}^T x_{2,L}$$

$$y(n) = h_{2,n}^T x_{1,N,(n)} + h_{2,n}^T x_{2,N,(n)}$$

$$h_{i,n} = \left[ h_{i,0} \ldots h_{iN-1} \right]^T$$

$$X_{i,N(n)} = \left[ X_{i(n)} \ldots X_{i(n-N+1)} \right]^T$$

$h_{iN}$, i=1,2 is the real response of the length N from the near end, and $h_{i,L}$=1,2 is the estimated response of the lenght L.

Minimization of the weighted least square criteria

$$J(n) = \sum_{l=1}^{n} \lambda^{n-l} |e(n)|^2, 0 < \lambda \leq 1$$

results in the solution of the linear equation system

$$R_{xx}(n) \begin{bmatrix} \hat{h}_{1,L} \\ \hat{h}_{2,L} \end{bmatrix} = r_{xx}(n)$$

where $r_{xx}(n)$ is the estimated cross correlation vector, and $R_{xx}(n)$ is the correlation matrix,

$$R_{xx}(n) = \sum_{l=1}^{n} \begin{bmatrix} x_{1,L}(l)x_{1,L}^T(l) & x_{2,L}(l)x_{1,L}^T(l) \\ x_{1,L}(l)x_{3,L}^T(l) & x_{3,L}(l)x_{2,L}^T(l) \end{bmatrix}$$

The problem at stereophonic echo cancellation is the conditional number for this matrix. Further has been shown
$L \geq M \Rightarrow R_{xx}(n)$ is singular n
$L < M \Rightarrow R_{xx}(n)$ is poorly conditioned
$L \geq N \Rightarrow$ misalignment $\varepsilon(n) \rightarrow 0, n \rightarrow \infty$
$L < N \Rightarrow$ misalignment $\varepsilon(n) \rightarrow 0 \rightarrow \forall n$
where the misalignment is

$$\varepsilon(n) = \|h - \hat{h}\|^2 / \|h\|^2 \text{ and } \hat{h} = \begin{bmatrix} \hat{h}_{1,L}^T & \hat{h}_{2,L}^T \end{bmatrix}^T \quad h = \begin{bmatrix} h_{1,L}^T & h_{2,L}^T \end{bmatrix}^T$$

A poorly conditioned $R_{xx}(n)$ increases the misalignment. Consequently there is a contradiction in the solution if L<<M is better conditioned, on the other hand the misalignment is reduced if L≥N, but practically is L<M=N. The solution of this misalignment is to reduce the correlation between the stereo channels.

The eigenvalues of the correlation matrix can be limited in downward direction by $\left[ 1 - |\gamma(f)|^2 \right]$, where $\gamma(f)$ is the coherence between the stereo channels. Misalignment therefore can be measured with the coherence function, which then serves as a measure of achieved decorrelation.
The present inventions therefore are intended to solve the above mentioned problems.

PRIOR ART

Two important applications for stereo acoustic echo cancellation is high-quality video conference and tele games. In the future, also desk-top based conference systems will have a need for stereo acoustic echo cancellers (AEC). These systems have different demands on bandwidth, bit rate etc.
Stereo acoustic echo cancelling, however, has turned out to be more complicated than the mono channel case. This is due to that, in the two channel case, the signals are linearly depending, which results in convergence problems for the echo canceller. Because of the linear dependence between the channels, there are theoretically no unique solutions for the echo canceller to identify. Furthermore, all not unique solutions are depending on the echo paths at the far end of the connection, F, (far end). In real situations, however, the solution is not singular, but only poorly conditioned due to uncorrelated microphone noise and infinitely long impulse responses on the echo paths of the far end. The convergence degree of the NMLS-algorithm is to a great extent depending on the number of the system conditions, so more sophisticated algorithms are needed at stereo acoustic echo cancellation.
Beside the utilization of more sophisticated algorithms, problems remain with unstable estimates of the echo paths. In order to stabilize the solution, the correlation between the stereo channels must be reduced without introduction of distorting distorsion. Different solutions to solve this have been presented, but have been rejected for different reasons (see for instance M.M. Sondhi, D.R. Morgan and J.L. Gall:"Stereophonic acoustic cancellation - an overview of the fundamental Problem"; IEEE Signal Processing Letters, 2(8):148-151, 1955). The most promising solution at present is to distort the stereo channels non-linearly (for instance J.Benesty, R.Morgan and M.M. Sondhi: "A better understanding and an improved solution to the problem of stereophonic acoustic echo cancellation". IEE Trans. On Speech and Audio Processing. To appear; A short version can be found in Proc. of ICASSP 1997 pp 303-306) where half-wave rectified parts of the signal are added to the signal itself. This distorsion does not destroy the stereophonic perception, but introduces noise which for the most part is inaudible, but can be registered depending on the extent of non-linearity.

At transmission of acoustic signals between parties in, for instance, a telecommunication, a certain part of the own sound is brought back and creates an echo. In most cases one wants to have this echo at least reduced to a level which is not disturbing. This is achieved by means of a so called echo canceller. The principle for these is that a part of the own signal is identified and subtracted from the received signal. It consequently is known to utilize echo cancellation in the mono case. At this previously known principles are utilized which i.a. are described in the patent literature, for instance US 5668865, US 5664011, US 5610909. In the patent documents US 5661813, US 5323459, US 5555310 and US 5513265, the problems of stereo acoustic echo cancellation are dealt with more specifically.

WO98/47276 which falls under Article 54(3) EPC discloses the generation of white noise signals which are added to the channel signals in accordance with respective frequency masking thresholds computed using auditory perception thresholds.

The purpose of the present invention is to solve the above discussed problem.

THE SOLUTION

This purpose is obtained according to the invention by a method according to claim 1 and a device according to claim 3 respectively.

The present invention relates to a method at stereo acoustic echo cancellation, where the echo is created on a connection for transmission of a stereo acoustic signal. The signal is coded on the transmitter side, F, and decoded on the receiver side, N. A perceptual audio coding is introduced. By perceptual coding is meant that the signal can consist of different frequencies which are transmitted at the same time, there one of these signals dominates over the other but gives no additional contribution to the received information. Furthermore, the side information of the coded signal is utilized. The echo after that can be identified and cancelled. By utilization of, for instance, MPEG-coding, perceptual coding which allows that the channel correlation between the stereo channels is reduced, is achieved. At frequencies over 2 kHz the perceptual coding is advantageous. Below 2 kHz, the side information can be utilized to further reduce the correlation. Each sub-band into which the signal is divided, indicates the working range of the signal and the quantizer which is used at the coding. Quantizer is selected at the coding at which at an analysed segment of the signal is utilized. Further, a masking threshold is appointed which defines distorsion levels which cannot be heard within the segment. The masking threshold is selected so that a just noticeable distorsion is attained. Uncorrelated noise between the channels are added to the margin in the decoder, at which an improved echo cancellation can be achieved.

The invention further relates to a device at stereo acoustic echo cancellation. A sound registering equipment on the transmitter side, F, registers the signal which is coded in a coder, C, and transmitted to a decoder, D, on the receiver side, N. In the coder, C, a perceptual coding of the signal is performed. Side information in the coded signal is further utilized. For identification of the echo and the cancellation of this, a stereo acoustic echo cancellator, AEC, is utilized. Perceptual coding is performed in the coder, C, by utilization of, for instance, MPEG-coding for reduction of the channel correlation between the channels. The decoder analyses segment of the signal for deciding a masking threshold which defines inaudible distorsion levels within the segment. The coder, C, further selects quantizer, dq. Appointment of masking threshold is made in the decoder in such a way that a margin to just noticeable distorsion is attained. Uncorrelated noise, between the channels, is added by the decoder to the signal.

ADVANTAGES

The invention makes possible that methods for cancellation of echoes, on connections over which stereo transmissions are made, are executed. The introduction of the invention is possible without addition of extra equipment, which may be expensive. By utilization of perceptual coders/decoders a possibility is given to implement the solution on the decoder side, without the coder having need for knowing this. The solution further has the advantage that a good conditioning is attained, without introducing distorison, which can interfere with the communication.

DESCRIPTION OF FIGURES

Figure 1 illustrates microphone and loudspeaker near-end, N, respective far-end, F. Within the frame with the broken line is the acoustic echo canceller (AEC), the stereo case. Only one of the back channels is shown.
Figure 2 illustrates the far-end room, stereo acoustic echo canceller, AEC, (stereo AEC) and perceptual audio coder, C/D (coder/decoder).

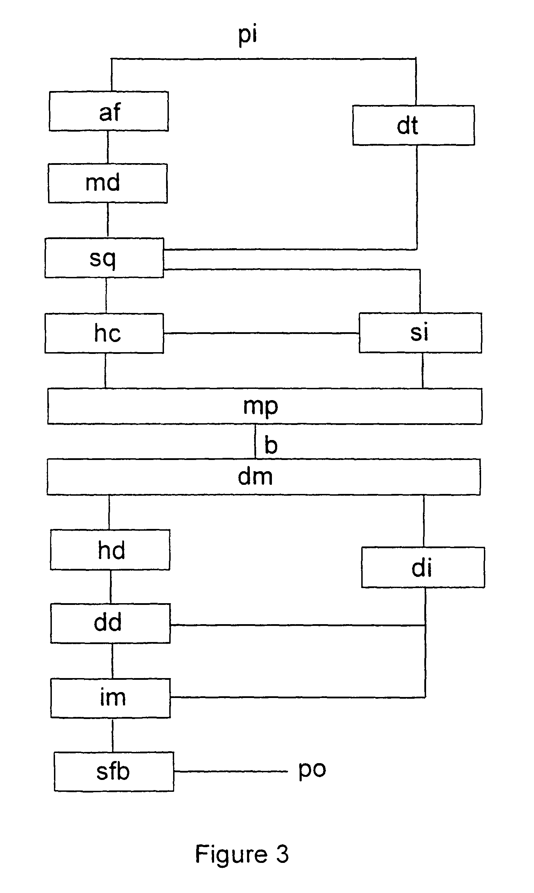

Figure 3 illustrates an MPEG-1 layer III decoder. The following designations have been used:

| | |
|---|---|
| pi: | PCM input |
| af : | Filter bank analysis |
| md: | MDCT |
| sq: | Scaling device and Quantizer |
| hc: | Huffman coding |
| mp: | Multiplexer |
| dm: | Demultiplexer |
| hd: | Huffman decoding |
| dd: | Dequantizer and descaling device |
| im: | Inverse MDCT |
| sfb: | Synthesis Filter Bank |
| po: | PCM output |
| dt | decide masking thresholds |
| si: | side information |
| di: | Decoding of side information |
| b: | MPEG layer III bit stream |

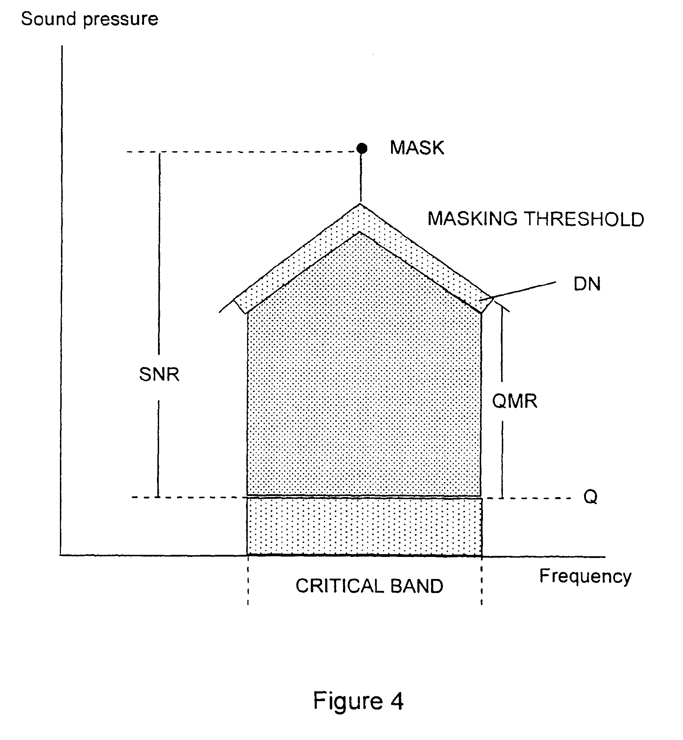

Figure 4 illustras the masking threshold. The dotted areas are masked by the tone. The sound pressure is indicated in dB. The frequency is indicated on a log scale. DN signifies decorrelating noise level. Q signifies quantizing noise level.

PREFERRED EMBODIMENT

In the following the invention is described on basis of the figures and the terms in them. Acoustic echo cancellation in stereo is considerably more difficult than echo cancellation in mono, due to strong correlation between the stereo channels.
This invention is based on utilizing a perceptual audio coder to reduce the correlation between the stereo channels without introducing audible distorsion. This will result in that the stereo canceller converges towards the correct echo paths and therefore gives a more stable echo cancellation which is not depending on the transmission room (far-end). The core of the invention is that one can reduce the correlation beyond that which the audio coder gives, by modifying its decoder. Extra uncorrelated (between the channels) noise is added (in the decoder) to such an extent that it is not audible, by the information from the coder being used in combination with an estimated perceptual masking threshold.
The solution consequently is flexible and does not require that the used coding standard is changed in any way. Only a small number of operations need to be included in the decoder.
The invention is based on that the distorsion is introduced as noise addition to the speech signal without interfering with this. Further, the qualities of the speech/audio coder (for instance MPEG-coder) which is on the transmission channel, C/D, between the near-end and the far-end, is utilized. For the purpose, a perceptual audio coder, which introduces the effect that the channel correlation is reduced between the stereo channels, is utilized. The coherence will go down below 0,95 for frequencies over 2 kHz with the MPEG Layer III coder. A coherence below 0,95 is aimed at, to condition the solution which the echo canceller shall find. At frequencies below 2 kHz the coherence still is high, so further modification of the signal is necessary in the range below 2 kHz. For this purpose, side information which is in the coded signal is utilized, without disturbing distorsion being introduced. Within each sub-band of the signal which is decoded, the working range of the signal is indicated, and which quantizer that the coder has utilized. The coder selects quantizer on basis of the amount of energy that is in the analysed segment of speech (or audio signal), and the so called masking threshold which indicates not audible distorsion levels in the segment. Selection is made with knowledge of that there often is a margin to the just noticeable distorsion level. The margin left is utilized by uncorrelated noise between the channels being added to the signal. By this measure, a coherence reduction is attained to find stable unique estimates of the echo paths in the near-end, N.

The most advanced part in the PMEG-1 standard is layer III, which typically compresses stereo sound up to 12 times without significant loss of quality of the sound. It is included in the standards such as H.310 audiovisual, broadband communications system, and H.323 visual telephone systems and equipmnnt for local networks. Layer III coders usually also are utilized as high quality coders in World Wide Web (WWW).

The high compression is possible by removing parts in the signal which are not audible, or are lacking information for the ear. At simultaneous masking, larger frequency components will screen off the smaller ones in nearby frequency bands, whereas at temporary masking, i.e. components just before or after (in the time domain), a big sound component is screened off. The audio coder estimates the global masking threshold, the just noticeable distorsion, as a function of frequency and time segment.

The sound decoder operates parallell with the global algorithm for estimation of the masking. The signal of the sound source in divided into 32 critically sampled down bandpass signals in a filter bank. In layer III the frequency selection is increased by each band pass signal being worked upon with a discrete cosinus transform (MDCT). The length of the MDCT-window is signal dependent and is either 6 or 18, where the shorter window is utilized for transients in the sound source. The MDCT-components are scaled and quantized after the decompression. The key for noticing coder is that sufficient number of quantizing levels in each sub-band exist for keeping the introduced quantizing noise below the global masking threshold. The data redundancy is reduced by utilizing Huffman coding on the signal before it is transmitted in the channel.

When two signals are not identical, the introduced quantization noise in the two channels is almost independent. This will result in that the correlation between the channels is reduced. Decoding is essentially performed in the same way as the coding, but just the reverse.

The correlation beween the channels are reduced even more if independent noise is added to the channels. Each of the DCT-bands cannot be optimally quantized due to big overhead. They are instead divided into five ranges with a defined number of quantizing levels. Define noise to mask relation (QMR) as the difference between the level of the quantizing noise and the level which is just audible in a given MDCT-band. After that, noise which is not audible can be added to the MDCT where QMR is positive. In the frequency ranges where the channel correlation need to be reduced to fulfil

$$QMR(j) > 0 \Rightarrow \tilde{X}^j_{mdct} = X^j_{mdct} + f(QMR(j)).v$$

$$QMR(j) < 0 \Rightarrow \tilde{X}^j_{mdct} = X^j_{mdct}$$

where $X'_{mdct}$ is the MDCT-component in band j and f(.) amplifies the noise component v which is added. A block implementing this channel decorrelation is added to the decoder just before the inverting of MDCT.

The global masking information is not accessible in the decoder, but thanks to the high frequency resolution of MDCT, a global masking estimate, the calculation complexity of which is simplified, is produced. Independent noise after that is added before the inverse MDCT in the MDCT-components which have sufficiently high SMR.

The invention is not restricted to the in the above described example of embodiment, or to the following patent claims, but may be subject to modifications within the frame of the idea of the invention.

## Claims

1. Method for stereo acoustic echo cancellation, where the echo is created on a connection for transmission of a stereo acoustic signal, which signal is coded on the transmitter side (F), and is decoded on the receiver side (N), wherein noise is added in the decoder (D) on respective channels to such an extent that it is not audible, said added noise being uncorrelated between the channels, **characterized in that** to identify and cancel said echo a perceptual audio coding is introduced and said uncorrelated noise is added to the signal by the, decoder (D), **in that** said noise is added to said non-audible extent by utilizing the side information in the coded signal in the bit stream from the perceptual audio coder (C) in combination with an estimated perceptual masking threshold, and **in that**, for each sub-band of the signal, the working range of the signal and which quantizer being used at the coding are indicated, said quantizer being selected on the basis of the amount of energy in the signal sub-band, the margin from said masking threshold indicating non-audible distortion levels in the sub-band to a just noticeable distorsion level being utilized by adding said uncorrelated noise.

2. Method according to claim 1, **characterized in that** the perceptual coding is realized by MPEG-coding, which allows the channel correlation between the stereo channels to be reduced.

3. Device for stereo acoustic echo cancellation on a connection for transmitting a signal recorded by a sound recording equipment on a transmitter side (F) and coded in a coder (C) to a decoder (D) on the receiver side (N), a stereo acoustic echo canceller (AEC) being provided on said connection for adding noise in the decoder (D) on respective channels to such an extent that it is not audible, said noise being uncorrelated between the channels, **characterized in that** the coder (C) is arranged to perform a perceptual coding of the signal, **in that** said stereo acoustic echo canceller (AEC) is adapted to identify and to cancel the echo by adding said noise in the decoder which in its turn is arranged to add said noise to the signal, **in that** said stereo acoustic echo canceller (AEC) is arranged to add said noise to said non-audible extent by utitizing the side information in the coded signal from the coder (C), which is arranged to perform the perceptual coding, in combination with an estimated perceptual masking threshold, **in that** the coder (C) is adapted to indicate the working range of the signal for each sub-band of the signal, and **in that** the coder (C) is arranged to select a quantizer on the basis of the amount of energy in the signal sub-band and by utilizing the margin from said masking threshold indicating non-audible distorsion levels in the sub-band to a just noticeable distorsion level by adding said uncorrelated noise.

4. Device according to claim 3, **characterized in that** the perceptual coding is performed in the coder (C), and **in that** MPEG-coding is utilized for reduction of channel correlation between channels.

**Patentansprüche**

1. Verfahren für akustische Stereo-Echo-Auslöschung, wo das Echo auf einer Verbindung zum Übertragen eines akustischen Stereosignals erzeugt wird, welches Signal auf der Senderseite (F) kodiert wird und auf der Empfängerseite (N) dekodiert wird, wobei Rauschen im Decoder (D) auf entsprechenden Kanälen in einem solchen Ausmaß hinzugefügt wird, dass es nicht hörbar ist, welches hinzugefügtes Rauschen zwischen den Kanälen unkorreliert ist, **dadurch gekennzeichnet, dass** zum Identifizieren und Auslöschen des Echos eine wahrnehmungsgerechte (perceptual) Audiokodierung eingeführt wird und das unkorrelierte Rauschen dem Signal durch den Decoder (D) hinzugefügt wird, dass das Rauschen bis zum nicht hörbaren Ausmaß unter Verwendung der Seiteninformation in dem kodierten Signal in dem Bitstrom von dem Codierer (C) des wahrnehmungsgerechten Audiosignals in Kombination mit einem geschätzten wahrnehmungsgerechten Maskierungsschwellwert hinzugefügt wird, und dass für jedes Unterband des Signals der Arbeitsbereich des Signals und welcher Quantisierer beim Codieren verwendet wird, angezeigt werden, welcher Quantisierer aufgrund der Menge von Energie im Signalunterband ausgewählt wird, wobei der Spielraum von dem Maskierungsschwellwert, der nicht hörbare Verzehrungspegel im Unterband zu einem gerade bemerkbaren Verzehrungspegel anzeigt, durch Hinzufügen des unkorrelierten Rauschens verwendet wird.

2. Verfahren nach Anspruch 1, **dadurch gekennzeichnet, dass** die wahrnehmungsgerechte Codierung durch MPEG-Codierung realisiert wird, was es ermöglicht, dass die Kanalkorrelation zwischen den Stereokanälen verringert wird.

3. Einrichtung für akustische Stereo-Echo-Auslöschung auf einer Verbindung zum Übertragen eines Signals, das durch eine Tonaufzeichnungsausrüstung auf einer Senderseite (F) aufgezeichnet und in einem Codierer (C) zu einem Decoder (D) auf der Empfängerseite (N) codiert wird, wobei ein akustischer Stereo-Echo-Auslöscher (AEC) auf der Verbindung für Hinzufügung von Rauschen in den Decoder (D) auf entsprechenden Kanälen in einem solchen Ausmaß vorgesehen ist, dass es nicht hörbar ist, welches Rauschen zwischen den Kanälen unkorreliert ist, **dadurch gekennzeichnet, dass** der Codierer (C) dazu ausgebildet ist, eine wahrnehmungsgerechte Codierung des Signals durchzuführen, dass der akustische Stereo-Echo-Auslöscher (AEC) dazu ausgebildet ist, das Echo zu identifizieren und zu löschen, indem das Rauschen im Decoder hinzugefügt wird, der wiederum dazu ausgebildet ist, das Rauschen dem Signal hinzuzufügen, dass der akustische Stereo-Echo-Auslöscher (AEC) so ausgebildet ist, das Rauschen bis zu dem nicht hörbarem Ausmaß unter der Verwendung der Seiteninformation im kodierten Signal vom Codierer (C) hinzuzufügen, der dazu ausgebildet ist, wahrnehrnungsgerechte Codierung in Kombination mit einem geschätzten wahrnehmungsgerechten Maskierungsschwellwert auszuführen, dass der Codierer (C) dazu ausgebildet ist, den Arbeitsbereich des Signals für jedes Unterband des Signals anzuzeigen, und dass der Codierer (C) ausgebildet ist, einen Quantisierer aufgrund der Energiemenge im Signalunterband und durch Verwendung des Spielraums von dem Maskierungsschwellwert auszuwählen, der nicht hörbare Verzerrungspegel im Unterband bis zu einem gerade merkbaren Verzerrungspegel durch Hinzufügung des unkorrelierten Rauschens anzeigt.

**4.** Vorrichtung nach Anspruch 3, **dadurch gekennzeichnet, dass** die wahrnebmungsgerechte Codierung in dem Codierer (C) durchgeführt wird und dass MPEG-Codierung für Verringerung von Kanalkorrelation zwischen Kanälen verwendet wird.

## Revendications

**1.** Procédé de compensation stéréo d'écho acoustique, dans lequel l'écho est créé sur une connexion pour transmission d'un signal acoustique stéréo, ce signal étant codé du côté émetteur (F) et étant décodé du côté récepteur (N), dans lequel un bruit est ajouté dans le décodeur (D) sur des canaux respectifs dans une mesure telle qu'il n'est pas audible, le dit bruit ajouté étant non corrélé entre les canaux, **caractérisé en ce que**, pour identifier et annuler le dit écho, un codage de perception audio est introduit et le dit bruit non corrélé est ajouté au signal par le décodeur (D), **en ce que** le dit bruit est ajouté à la dite mesure non audible par utilisation des informations secondaires dans le signal codé dans le flux binaire venant du codeur audio de perception (C) en combinaison avec un seuil de masquage de perception estimé, et **en ce que**, pour chaque sous-bande du signal, la plage de travail du signal et le quantificateur à utiliser pour le codage sont indiqués, le dit quantificateur étant sélectionné sur la base de la quantité d'énergie dans la sous-bande de signal, la marge entre le dit seuil de masquage indiquant des niveaux de distorsion non audibles dans la sous-bande et un niveau de distorsion juste sensible étant utilisée par addition du dit bruit non corrélé.

**2.** Procédé selon la revendication 1, **caractérisé en ce que** le codage de perception est réalisé par codage MPEG, ce qui permet de réduire la corrélation de canal entre les canaux stéréo.

**3.** Dispositif pour compensation stéréo d'écho acoustique sur une connexion de transmission d'un signal, enregistré par un équipement d'enregistrement de son sur un côté émetteur (F) et codé sur un codeur (C), à un décodeur (D) du côté réception (N), un dispositif d'annulation d'écho acoustique stéréo (AEC) étant prévu sur la dite connexion pour ajouter un bruit dans le décodeur (D) sur des canaux respectifs dans une mesure telle qu'il ne soit pas audible, le dit bruit étant non corrélé entre les canaux, **caractérisé en ce que** le codeur (C) est prévu pour effectuer un codage de perception du signal, **en ce que** le dit dispositif d'annulation d'écho acoustique stéréo (AEC) est prévu pour identifier et supprimer l'écho par addition du dit bruit dans le décodeur qui est lui-même prévu pour ajouter le dit bruit au signal, **en ce que** le dit dispositif d'annulation d'écho acoustique stéréo (AEC) est prévu pour ajouter le dit bruit à la dite mesure non audible par utilisation de l'information secondaire dans le signal codé provenant du codeur (C), qui est agencée de manière à effectuer le codage de perception, en combinaison avec un seuil de masquage de perception estimé, **en ce que** le codeur (C) est prévu pour indiquer la plage de travail du signal pour chaque sous-bande du signal, et **en ce que** le codeur (C) est prévu pour la sélection d'un dispositif de quantification sur la base de la quantité d'énergie dans la sous-bande de signal et, par utilisation de la marge par rapport au dit seuil de masquage indiquant des niveaux de distorsion inaudibles dans la bande secondaire à un niveau de distorsion juste notable, par addition du dit bruit non corrélé.

**4.** Dispositif selon la revendication 3, **caractérisé en ce que** le codage de perception est effectué dans le codeur (C) et **en ce qu'**un codage MPEG est utilisé pour réduction de la corrélation de canal entre canaux

F

N

g1(n)

s

g2(n)

x1(n)

x2(n)

w1(n)

w2(n)

h1(n)    h2(n)

(+)

Figure 1

F       AEC                    AEC       N

C       D

D       C

Figure 2

Figure 3

Sound pressure

Figure 4